# EUROPÄISCHE PATENTSCHRIFT

(11) **EP 0 461 424 B1**
(45) Veröffentlichungstag und Bekanntmachung des Hinweises auf die Patenterteilung: **21.09.1994**
(21) Anmeldenummer: 91108164.4
(22) Anmeldetag: 21.05.1991
(51) Int. Cl.: G01B 11/30

(54) **Vorrichtung zum optischen Erfassen eines Belags**
Device to optically detect a coating
Dispositif pour la détection optique d'un revêtement

(30) Priorität: 15.06.1990 DE 4019066
(43) Veröffentlichungstag der Anmeldung: 18.12.1991
(73) Patentinhaber: ROBERT BOSCH GMBH, 70442 Stuttgart (DE)
(72) Erfinder: Pientka, Rainer, Dipl.-Phys., W-7590 Achern (DE); Karl, Gerhard, Dipl.-Phys., W-8702 Himmelstadt (DE)

(56) Entgegenhaltungen:
- EP-A- 0 249 031
- EP-A- 0 350 680
- EP-A- 0 365 788
- DD-C- 231 634

## Beschreibung

### Stand der Technik

Die Erfindung geht aus von einer Vorrichtung zum optischen Erfassen eines Belags auf der Oberfläche einer optisch transparenten Scheibe nach dem Oberbegriff des unabhängigen Patentanspruchs. Bei einer bekannten Vorrichtung ist der opto-elektronische Sensor, der den Strahlungssender und den Strahlungsempfänger aufweist, mit Hilfe einer durchgehend optisch hochtransparenten Folie auf einer Scheibe befestigt. Mit dieser optischen Ankopplung des Sensors an die Scheibe wird sowohl die optische Ankopplung als auch andererseits die Befestigung an der Scheibe bewirkt. Diese Folien sind aber im allgemeinen relativ weich, so daß durch seitlichen Druck auf den Sensor die Folie verschert werden kann. Ferner ergibt sich eine Verringerung ihrer Klebeeigenschaften bei hohem Feuchtegehalt. Dadurch kann sich der Sensor im Extremfall von der Scheibe lösen, ferner kann durch die Verscherung der Folie auch der Strahlengang in der Folie verändert werden, so daß Fehlmessungen auftreten können.

Ferner ist es aus der nachveröffentlichten DE-A-40 06 420.4 bekannt, in einer Klebefolie Aussparungen auszubilden, in denen Stücke aus optisch hochtransparentem Material eingesetzt sind bzw. die als Meßstrecke dienen. Diese Vorrichtung baut aber noch relativ aufwendig.

In der EP-A-0 249 031 ist eine Vorrichtung zum optischen Erfassen von Fremdkörpern an der Streuscheibe einer Scheinwerferanlage beschrieben. Hierbei sind in Ausnehmungen des Gehäuses eine strahlungsemittierende Diode als Sender und eine Photodiode als Empfänger angeordnet. Der Sender und der Empfänger sind optisch an der Innenseite der Streuscheibe angekittet. Dieser Kitt beeinflußt aber auch die emittierte Strahlung, so daß an den Grenzflächen eine die Messung negativ beeinflussende Streuung entstehen kann. Auch ist die Verbindung mechanisch empfindlich.

### Vorteile der Erfindung

Die erfindungsgemäße Vorrichtung mit den kennzeichnenden Merkmalen des unabhängigen Patentanspruchs hat demgegenüber den Vorteil, daß auf eine direkte Klebung des Sensors an der Scheibe verzichtet werden kann. Die Befestigung des Sensors an der Frontscheibe eines Fahrzeugs kann durch den ohnehin vorhandenen Fuß des Innenraum-Spiegels vorgenommen werden, oder der Sensor wird mit Hilfe von an der Scheibe angeklebten Basisplatten befestigt. Für beide Befestigungsarten ist im Prinzip nur eine Sensorausgestaltung notwendig. Aufgrund des Dichtrings mit seinen elastischen Eigenschaften entfällt eine Anpassung des gesamten Sensors, insbesondere der Sensorunterseite an unterschiedliche Radien der Scheiben. Ferner schützt der Dichtring gleichzeitig die optischen Fenster und die Meßstrecke zwischen dem Sender und dem Empfänger vor Verschmutzungen und insbesondere vor eindringender Feuchtigkeit. Dadurch können auftretende Meßfehler, insbesondere Fehlsignale vermieden werden. Bei Verwendung von optischen Fenstern aus elastischem, hochtransparentem Material, wie z. B. Silikon, oder von einseitig klebender hochtransparenter Folie, die auf die optischen Fenster angebracht werden, ist eine blasenfreie Befestigung der optischen Fenster am Sender und am Empfänger möglich. Hierdurch können Fehlsignale verhindert werden. Die Funktionen der mechanischen Befestigung und der optischen Ankopplung des Senders bzw. des Empfängers mit Hilfe der optischen Fenster bzw. Folie an die Scheibe werden von zwei getrennten Elementen übernommen. Dadurch kann auf eine doppelseitige Klebung der optischen Fenster mit Hilfe eines Spezialklebers oder mit Hilfe von Folien verzichtet werden. Der vom Scheibenhersteller zu erbringende Aufwand an Vormontage wird für beide Ausgestaltungen auf ein Minimum reduziert. Nur bei der Ausbildung mit den Basisplatten muß er die Basisplatten vorbereitend anbringen. Hierzu sind aber bereits eingesetzte und im Dauerbetrieb erprobte Klebetechniken für die Grenzflächen Glas/Metall verwendbar. Da die Meßstrecke zwischen dem Sender und dem Empfänger mit Hilfe eines Dichtrings vor Verschmutzung und Feuchtigkeit abgedichtet ist, genügt, es wenn über der Meßstrecke auf der Scheibeninnenseite ein kleiner Luftspalt vorhanden ist. Insbesondere ist es somit nicht mehr notwendig, die Sensorunterseite mit einer Verspiegelung zu versehen, wie sie zum Beispiel bei der direkten, ganzflächigen Klebung der Sensorunterseite an die Scheibe notwendig ist. Die Vorrichtung selbst baut dadurch besonders einfach und kann in preisgünstiger Weise an der Scheibe befestigt werden.

Durch die in den abhängigen Patentansprüchen aufgeführten Maßnahmen ist eine vorteilhafte Weiterbildung und Verbesserung der in dem Hauptanspruch angegebenen Merkmale möglich.

### Zeichnung

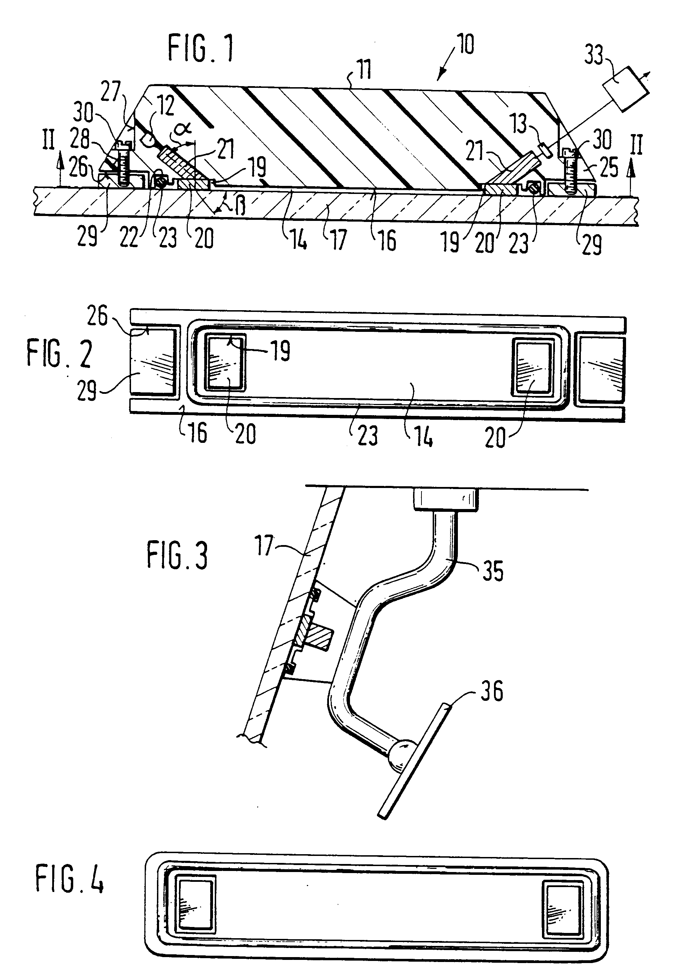

Ausführungsbeispiele der Erfindung sind in der Zeichnung dargestellt und in der nachfolgenden Beschreibung näher erläutert.
Es zeigen die Figur 1 einen Schnitt durch eine an einer Scheibe angebauten Vorrichtung,
Figur 2 eine Draufsicht auf die Unterseite des Sensors in Blickrichtung II-II,
Figur 3 einen Schnitt durch eine Vorrichtung, die mit Hilfe eines Spiegelfußes befestigt ist,
Figur 4 einen Blick auf die Unterseite der in der Figur 3 verwendeten Vorrichtung.

### Beschreibung der Ausführungsbeispiele

In der Figur 1 ist mit 10 ein Sensor bezeichnet, der aus einer in einem Gehäuse 11 angeordneten Light-Emitting-Diode (LED, strahlungsemittierende Diode) als Strahlungssender 12 und einer Fotodiode z. B. einer Silizium-Fotodiode als Empfänger 13 besteht. Das Gehäuse 11 ist z. B. mit einer Kunststoffmasse ausgefüllt, so daß sich insbesondere im Bereich zwischen dem Sender 12 und dem Empfänger 13, der als Meßstrecke 14 dient, eine relativ glatte Oberfläche ergibt. Sender 12 und Empfänger 13 sind jeweils unter dem gleichen Winkel zur Oberfläche angeordnet, so daß die optischen Achsen des Senders 12 und des Empfängers 13 zueinander geneigt sind. An der Unterseite 16 des Sensors 10, d. h. an der einer Scheibe 17 zugewandten Seite des Sensors 10 sind Aussparungen 19 ausgebildet, die eine relativ geringe Tiefe aufweisen und eine sonst beliebig ausgebildete Öffnungsform haben. In die Aussparungen 19 sind Folienstücke 20 eingesetzt, die aus optisch hochtransparentem, elastischem Material bestehen. Auf diese Folienstücke 20 sind starre optische Prismen 21 aufgesetzt, die zusammen mit den Folienstücken 20 zur optischen Ankopplung des Senders 12 bzw. des Empfängers 13 dienen. Die Folienstücke 20 weisen auf der den Prismen 21 zugewandten Seite eine Klebeschicht auf, mit der sie an den optischen Prismen 21 befestigt sind. Um eine einwandfreie, insbesondere meßfehlerfreie optische Ankopplung zu gewährleisten, sollen sich in der Grenzfläche zwischen den Prismen 21 und den Folienstücken 20 keine Blasen bilden. Ferner ist es aber auch möglich, die Prismen selbst aus elastischem Material z.B. Silikon, das gute adhesive Eigenschaften zu Glas aufweist, herzustellen. Ohne daß ein Folienstück als Zwischenschicht notwendig ist, kann dann das elastische Prisma direkt gegen die Scheibe gepreßt werden. Sowohl die Folienstücke 20 als auch die elastischen Prismen können auf der der Scheibe zugewandten Seite eine geringfügig ballige Oberfläche aufweisen, mit der sie dann an die Scheibe 17 angepreßt werden. Um eine einfache Herstellung des Sensors 10 zu ermöglichen, können die Folienstücke 20 kleiner als die Aussparungen 19 ausgebildet sein, so daß die Folienstücke 20 ohne Einhaltung von Toleranzen eingesetzt werden können. In der Unterseite 16 des Sensors 10 ist eine Nut 22 ausgebildet, die die Folie bzw. die elastischen Prismen und die Meßstrecke 14 umgreift. In die Nut 22 ist eine Dichtung 23 eingelegt. Als Dichtung 23 kann z. B. ein O-Ring oder jede andere beliebige Form einer Dichtung verwendet werden. Sie sollte aber aus genügend elastischem Material bestehen, um ein einwandfreies dichtes Anliegen der Dichtung 23 auch bei eventuellen Unebenheiten der Innenseite der Scheibe 17 zu gewährleisten.

An zwei diametral gegenüberliegenden Seitenflächen des Gehäuses 11 befindet sich je ein Fortsatz 25. Der Fortsatz 25 hat die Form eines Überhangs und wird durch die schrägverlaufende Seitenflächen des Gehäuses 11 gebildet. Er weist an seiner Unterseite, d. h. auf der der Scheibe 17 zugewandten Seite, eine Aussparung 26 auf. Etwa in der Mitte der Seitenflächen ist eine Ausnehmung 27 ausgebildet. Ferner befindet sich im Fortsatz 25 eine durchgehende Bohrung 28, die von der Ausnehmung 27 zur Aussparung 26 verläuft. Im Bereich der Aussparung 26 ist auf der Scheibe 17 eine Basisplatte 29 aus z. B. metallischem Material angeklebt. Zur Klebung können herkömmlich bekannte und erprobte Klebetechniken verwendet werden. Mit Hilfe von in den Bohrungen 28 angeordneten Schrauben 30 wird das Gehäuse 11 an den Basisplatten 29 befestigt. Es ist aber auch möglich, andere Befestigungstechniken zu verwenden. Besonders vorteilhaft sind aber lösbare Verbindungen, da der Sensor 10 dann jederzeit wieder ausgetauscht werden kann.

Der Sensor 10 wird mit allen seinen Bestandteilen vor der Montage auf der Scheibe 17 zusammengebaut. Auf der Scheibe 17 sind nur die Basisplatten 29 auf der Innenseite anzukleben. Anschließend wird das Gehäuse 11 auf die Scheibe 17 aufgesetzt. Mit Hilfe der Schrauben 30 wird nun das Gehäuse 11 auf die Basisplatte 29 und somit auf die Innenseite der Scheibe 17 aufgeschraubt. Da die Dichtung 23 über die Nut 22 bzw. die optischen Fenster 20 über die Aussparung 19 geringfügig hinausragen, werden sie aufgrund der Anpreßkraft der Schraubverbindung auf die Innenseite der Scheibe 17 angepreßt. Die Dichtung 23 liegt dadurch auf ihrem gesamten Verlauf dichtend auf der Scheibe 17 auf. Dadurch wird ein Eindringen von Schmutz und Feuchtigkeit in den Meßbereich 14 zwischen dem Sender 12 und dem Empfänger 13 verhindert.

Die vom Sender 12 emittierte Strahlung wird mit Hilfe der Prismen 21 und der Folienstücke 20 bzw. nur mit den elastischen Prismen in die Scheibe 17 eingekoppelt. Die optischen Prismen dienen dabei dazu, die Strahlung schräg in die Scheibe 17 einzustrahlen. Würde man ohne Prismen einstrahlen, so kann der in der Scheibe gewünschte Winkel β = 50° nicht erreicht werden. Auch ist der Verlust an Strahlung durch Reflektion an der Oberfläche der Scheibe 17 nicht zu vernachlässigen. Je größer dabei der Einstrahlungswinkel α ist, desto größer ist der reflektierte Anteil der Strahlung. Die Strahlung wird an der Grenzfläche der Außenseite der Scheibe 17 (Scheibe 17/Atmosphäre) gemäß der Totalreflexion reflektiert. Ebenfalls wird die Strahlung an der Grenzfläche der Innenseite der Scheibe 17 und der sich als Luftspalt gebildeten Meßstrecke 14 total reflektiert. Im Bereich der optischen Prismen, d. h. im Bereich des Empfängers 13, tritt die Strahlung wieder durch das als optische Fenster dienende Folienstück 20 hindurch in den Empfänger 13 ein.

Abgesehen von geringen Verlusten gelangt bei einer sauberen Oberfläche nahezu die gesamte an der Grenzfläche Scheibe/Atmosphäre total reflektierte Strahlungsmenge in den Empfänger 13. Die vom Sender 12 ausgestrahlte Strahlung kann z. B. im Bereich der Wellenlänge von 565 nm liegen. Die verwendete Wellenlänge ist aber vom Material bzw. dessen optischen Eigenschaften der Scheibe 17 abhängig. Die oben angegebene Wellenlänge gilt z. B. für grüne Verbundglasscheiben von Kraftfahrzeugen. Sollen hingegen andere getönte Scheiben von Kraftfahrzeugen oder die farbigen Heckleuchten bzw. die Scheinwerferleuchten von Kraftfahrzeugen überwacht werden, so ist die Wellenlänge darauf entsprechend einzustellen.

Befindet sich auf der Außenseite der Scheibe 17 ein Belag, z. B. Regentropfen, so bewirken diese eine Auskopplung eines Teils der vom Sender 12 ausgestrahlten Strahlung. Ein Teil der Strahlung gelangt dadurch nicht mehr zum Empfänger 13, sondern wird an der Grenzfläche Scheibe/Atmosphäre in die Atmosphäre hinausgebrochen. Dadurch ergibt sich bei sauberer Scheibe ein sehr hohes, mit Regentropfen bedeckter Scheibe ein kleineres, deutlich unterscheidbares Meßsignal. Auf diese Weise bewirken die Regentropfen eine Verminderung der detektierten Strahlungsmenge im Empfänger 13, was durch eine nicht näher dargestellte Auswerteschaltung 33 erfaßt wird. Mit Hilfe der Auswerteschaltung 33 können auch Zusatzfunktionen gesteuert und überprüft werden. Die Auswerteschaltung kann auch so steuern, daß sie nur bei eingeschaltetem Scheinwerferlicht und bei einer entsprechenden vorgegebenen Schwächung auslöst. Wird hingegen eine Windschutzscheibe überwacht, so kann mit dieser Auswerteschaltung auch eine Intervallschaltung für die Scheibenwischer gesteuert werden.

Die Vorrichtung kann für alle zu reinigenden Scheiben eines Fahrzeugs, insbesondere Kraftfahrzeugs verwendet werden. Sowohl die Vorder- als auch die Heckscheibe kann überwacht werden. Auch ist die Vorrichtung bei den Streuscheiben der Frontleuchten und bei den Streuscheiben der Heckleuchten und der Blinker verwendbar.

Bei dem Ausführungsbeispiel nach der Figur 3 und nach der Figur 4 wird die Anpreßkraft für den Sensor 10 an die Scheibe 17 statt mit Hilfe einer Schraubverbindung durch den Fuß 35 eines Spiegels 36 erzeugt. Das Gehäuse 11 des Sensors 10 kann dabei wie das in Figur 1 und Figur 2 dargestellte Gehäuse 11 ausgebildet sein. Selbstverständlich sind dann aber die Fortsätze 25 für die Befestigungseinrichtung nicht mehr notwendig. Wird also der Sensor 10a zur Detektion von Regentropfen auf der Windschutzscheibe 17a eines Kraftfahrzeugs verwendet, so ist auch die in Figur 4 dargestellte Ausbildung der Unterseite 16a des Sensors 10a verwendbar. Hierbei ist, wobei die gleichen Teile wie in Figur 1 und 2 wieder mit denselben Ziffern bezeichnet sind, in einer Nut 22 eine Dichtung 23 eingesetzt. Innerhalb des von der Dichtung 23 umfaßten Bereichs sind zwei Aussparungen 19 im Boden des Sensors 10a ausgebildet, in die die optischen Folienstücke 20 eingesetzt sind. Zwischen den beiden optischen Folienstücke 20 befindet sich wiederum die als Luftspalt gebildete Meßstrecke 14 zwischen dem Sender 12 und dem Empfänger 13. Um eine möglichst gleichmäßige Verteilung der Anpreßkraft durch den Fuß 35 auf das Gehäuse 11a zu gewährleisten, sollte der Fuß etwa in der Mitte der Meßstrecke 14 am Sensor 10a angreifen.

Die Wirkungsweise des Sensors 10a entspricht wiederum dem in der Figur 1 und 2 dargestellten Sensor. Der Sensor 10 wird mit in die Nut 22 eingesetzter Dichtung 23 im Kraftfahrzeug am Fuß 35 fixiert und somit zwischen dem Fuß 35 und der Windschutzscheibe 17a eingeklemmt bzw. in einer dafür vorgesehenen Aussparung in den Spiegelfuß eingelegt und durch eine z. B. federnde Vorrichtung gegen die Scheibe gepreßt.

## Patentansprüche

1. Vorrichtung zum optischen Erfassen von Fremdkörpern oder eines Belags auf der Oberfläche einer optisch transparenten Scheibe (17) mit einem auf der Scheibe (17) befestigten Gehäuse (11), in dem wenigstens ein Strahlungssender (12) und wenigstens ein Strahlungsempfänger (13) angeordnet sind, wobei das Gehäuse (11) auf der der Scheibe (17) zugewandten Seite (16) im Bereich des bzw. der Sender(s) (12) und des bzw, der Empfänger(s) (13) Ausnehmungen (19) aufweist, dadurch gekennzeichnet, daß in diese Ausnehmungen (19) optische, an der Scheibe (17) anliegende Fenster (20) aus elastischem Material eingesetzt sind, und daß im Gehäuse (11) eine die optischen Fenster (20) und eine zwischen den optischen Fenstern (20) befindliche Meßstrecke (14) umgreifende Nut (22) ausgebildet ist, in der eine Dichtung (23) eingesetzt ist.

2. Vorrichtung nach Anspruch 1, dadurch gekennzeichnet, daß die optischen Fenster (20) die Unterseite elastischer optischer Prismen sind und daß die Prismen am Sender (12) bzw. am Empfänger (13) angeordnet sind.

3. Vorrichtung nach Anspruch 1, dadurch gekennzeichnet, daß die optischen Fenster (20) aus einem starren optischen Prisma (21) und einem an der Unterseite des Prismas (21) befestigten elastischen, optisch transparenten Folienstück (20) bestehen.

4. Vorrichtung nach einem der Ansprüche 1 bis 3, dadurch gekennzeichnet, daß entlang der zwischen den optischen Fenstern (20) verlaufenden Meßstrecke (14) ein Luftspalt zwischen dem Gehäuse (11) und der Scheibe (17) ausgebildet ist.

5. Vorrichtung nach einem der Ansprüche 1 bis 4, dadurch gekennzeichnet, daß im Gehäuse (11) außerhalb des von der Dichtung (23) umgebenen Bereichs Ausnehmungen (26) ausgebildet sind, die mit auf der Scheibe (17) aufgeklebten Basisplatten (29) korrespondieren, und daß das Gehäuse (11) mit Hilfe von Befestigungsmitteln (30) an den Basisplatten (29) befestigt ist.

6. Vorrichtung nach einem der Ansprüche 1 bis 4, dadurch gekennzeichnet, daß zur Befestigung das Gehäuse (11) der Vorrichtung zwischen der Scheibe (17) und dem Fuß (35) eines Spiegels (36) so angeordnet ist, daß der Fuß (35) das Gehäuse (11) an die Scheibe (17) anpreßt.

7. Vorrichtung nach einem der Ansprüche 1 bis 5, dadurch gekennzeichnet, daß die Scheibe (17) die Streuscheibe eines Scheinwerfers eines Kraftfahrzeuges ist.

8. Vorrichtung nach einem der Ansprüche 1 bis 6, dadurch gekennzeichnet, daß die Scheibe (17) eine Windschutzscheibe eines Kraffahrzeuges ist.

## Claims

1. Device for the optical detection of extraneous bodies or of a coating on the surface of an optically transparent plate (17) having a housing (11) which is secured on the plate (17) and in which at least one radiation emitter (12) and at least one radiation receiver (13) are disposed, in which the housing (11) exhibits, on the side (16) facing the plate (17), in the region of the emitter or emitters (12) and of the receiver or receivers (13), recesses (19), characterized in that optical windows (20) of elastic material, which windows rest on the plate (17), are inserted into these recesses (19), and in that in the housing (11) a groove (22) is formed, which groove embraces the optical windows (20) and a measuring section (14) situated between the optical windows (20), and in which groove a seal (23) is inserted.

2. Device according to Claim 1, characterized in that the optical windows (20) are the bottom surface of elastic optical prisms, and in that the prisms are disposed at the emitter (12) or respectively at the receiver (13).

3. Device according to Claim 1, characterized in that the optical windows (20) comprise a rigid optical prism (21) and an elastic, optically transparent foil piece (20) secured to the bottom surface of the prism (21).

4. Device according to one of Claims 1 to 3, characterized in that an air gap is formed between the housing (11) and the plante (17), along the measuring section (14) extending between the optical windows (20).

5. Device according to one of Claims 1 to 4, characterized in that in the housing (11) outside the region surrounded by the seal (23), recesses (26) are formed, which correspond to baseplates (29) adhesively bonded to the plate (17), and in that the housing (11) is secured to the baseplates (29) by means of securing means (30).

6. Device according to one of Claims 1 to 4, characterized in that for the securing, the housing (11) of the device is disposed between the plate (17) and the foot (35) of a mirror (36), so that the foot (35) presses the housing (11) onto the plate (17).

7. Device according to one of Claims 1 to 5, characterized in that the plate (17) is the diffusing lens of a headlight of a motor vehicle.

8. Device according to one of Claims 1 to 6, characterized in that the plate (17) is a windscreen of a motor vehicle.

## Revendications

1. Dispositif pour la détection optique de corps étrangers ou d'une couche à la surface d'une vitre optiquement transparente (17) avec un boîtier (11) fixé sur la vitre (17), dans lequel sont disposés au moins un émetteur de rayonnement (12) et au moins un récepteur de rayonnement (13), le boîtier (11) présentant des évidements sur le côté (16) tourné vers la vitre (17) dans la zone de l'émetteur ou des émetteurs (12) et du récepteur ou des récepteurs (13), dispositif caractérisé en ce que dans ces évidements (19) sont insérés des fenêtres en matière plastique(20) reposant sur la vitre (17), et en ce que dans le boîtier (11) est constituée une rainure (22) entourant les fenêtres optiques (20) et un trajet de mesure (14) se trouvant entre les fenêtres optiques (20), rainure dans laquelle est inséré un joint d'étanchéité (23).

2. Dispositif selon la revendication 1, caractérisé en ce que les fenêtres optiques (20) sont constituées par la face inférieure de prismes optiques élastiques et en ce que les pistons sont disposés sur l'émetteur (12) ou sur le récepteur (13).

3. Dispositif selon la revendication 1, caractérisé en ce que les fenêtres optiques (23) consistent en un prisme optique rigide (21) et un morceau de feuille optiquement transparente, élastique, fixée sur la face inférieure du prisme (21).

4. Dispositif selon l'une des revendications 1 à 3, caractérisé en ce que le long du trajet de mesure (14) s'étendant entre les fenêtres optiques (20), on constitue un entrefer entre le boîtier (11) et la vitre (17).

5. Dispositif selon l'une des revendications 1 à 4, caractérisé en ce que dans le boîtier (11) on constitue des évidements (26) en dehors de la zone entourée par le joint d'étanchéité (23), évidements qui correspondent à des plaques de base (29) collées sur la vitre (17) et en ce que le boîtier (11) est fixé à l'aide de moyens de fixation (30) sur les plaques de base (29).

6. Dispositif selon l'une des revendications 1 à 4, caractérisé en ce que, pour la fixation le boîtier (11) du dispositif situé entre la vitre (17) et le pied (35) d'un rétroviseur (36), est disposé de telle façon que le pied (35) passe le boîtier (11) sur la vitre (17)

7. Dispositif selon l'une des revendications 1 à 5, caractérisé en ce que la vitre (17) est la glace d'un phare d'un véhicule à moteur.

8. Dispositif selon l'une des revendications 1 à 6, caractérisé en ce que la vitre (17) est un pare-brise d'un véhicule à moteur.
